# EUROPEAN PATENT APPLICATION

(11) **EP 4 838 088 A1**
(43) Date of publication of application: **11.11.2026**
(21) Application number: 26175518.5
(22) Date of filing: 29.04.2026
(51) Int. Cl.: F03D 1/00, F03D 80/50

(54) **SEGMENTED BUSHING FOR A YAW BRAKE ASSEMBLY OF A WIND TURBINE AND METHODS FOR REPAIRING SAME**

(30) Priority: 06.05.2025 US 202519199802
(71) Applicant: GE Vernova Infrastructure Technology LLC, Greenville, SC 29615 (US)
(72) Inventor: Johnson, Michael R., Greenville, South Carolina, 29615 (US); Leonard, Jay F., Greenville, South Carolina, 29615 (US); Davidson, Paul Howard, Greenville, South Carolina, 29615 (US); Janicz, Aaron P., Greenville, South Carolina, 29615 (US); Madge, James H., Greenville, South Carolina, 29615 (US)
(74) Representative: Zimmermann & Partner Patentanwälte mbB

(57) **Abstract**

A yaw brake assembly for a yaw bearing of a wind turbine includes at least one yaw brake having a segmented bushing constructed of a plurality of annular segments. Each of the plurality of annular segments includes a wall portion and a flange portion extending from the wall portion. The wall portions are arranged together at a plurality of interfaces to form a cylindrical bushing sized for receipt within a through hole of a bedplate support frame of the wind turbine. The yaw brake assembly also includes a cylinder assembly arranged within the segmented bushing and including a piston assembly. Further, the yaw brake assembly includes a brake pad arranged below the cylinder assembly, wherein the cylinder assembly drives the piston assembly to apply a downward load to the brake pad to engage with a friction surface of the yaw bearing.

## Description

### FIELD

The present disclosure relates generally to brake assemblies for a wind turbine, such as a yaw brake assembly of a wind turbine, and, more particularly, to a segmented bushing for a yaw brake assembly of a wind turbine and methods for repairing same.

### BACKGROUND

Wind power is considered one of the cleanest, most environmentally friendly energy sources presently available, and wind turbines have gained increased attention in this regard. A modern wind turbine typically includes a tower, a nacelle mounted on the tower, and a rotor coupled to the nacelle. The rotor typically includes a rotatable hub and a plurality of rotor blades coupled to and extending outwardly from the hub. Each rotor blade may be spaced about the hub so as to facilitate rotating the rotor to enable kinetic energy to be transferred from the wind into usable mechanical energy, and subsequently, electrical energy.

In order to efficiently produce electrical energy, it is typically desirable for the nacelle of the wind turbine to be oriented in aerodynamic alignment with the winds acting on the wind turbine. To properly orient the rotor blades relative to the direction of the wind, wind turbines typically include one or more yaw drive mechanisms configured to engage a yaw bearing for rotating the nacelle relative to the tower. However, once aerodynamic alignment is achieved, additional rotation of the nacelle relative to the tower must be resisted. As such, to resist such additional rotation, a wind turbine may include one or more yaw brake assemblies.

The yaw brake assemblies of modern wind turbines typically are cylindrical in nature and are inserted through the bedplate support frame. For example, typical yaw brake assemblies utilize the top surface of the yaw bearing as a braking friction surface and the bedplate support frame as a mounting structure for a braking load actuating unit. More specifically, known yaw brake assemblies may generally include any suitable structure and/or means for pushing or pressing a brake piston against the friction surface such that a brake pad is maintained in sliding engagement with the friction surface. For example, known yaw brake assemblies may include a bolt inserted through a corresponding monolithic bushing mounted within a housing. As such, the bolt is configured to apply a downward force against a thrust piece movably disposed with the brake piston. The thrust piece, in turn, is configured to transmit the downward force applied by the bolt to the brake piston, thereby pushing the brake piston towards the friction surface. Some yaw brake assemblies have a spring-applied cylinder, whereas others have a hydraulic-applied cylinder.

For example, a yaw brake assembly generally includes a cylinder assembly arranged within a monolithic bushing that are both received within a through hole of a bedplate of the wind turbine. The cylinder assembly includes a piston that applies a downward cyclical load to a brake pad. During manufacturing of the wind turbine, each monolithic bushing is installed from a bottom side of the bedplate due to a flange of the bushing having a larger diameter than a through hole that receives the bushing. The corresponding cylinder assembly is then secured to each bushing to secure the bushing in place. The bedplate, nacelle, and other uptower components are then lifted uptower via a crane and secured atop the tower of the wind turbine.

Overtime, the downward cyclical load of the yaw brake assembly can cause a reaction load on the bushing, which can lead to bushing damage and/or failure. In the event of bushing damage or failure within the yaw brake assembly, the bushing cannot currently be replaced without a substantial repair operation that requires a crane to lower the nacelle from atop the tower to the ground and remove the yaw bearing. For example, since the flange has a larger diameter than the through hole, the bushing cannot be removed from a top side of the bedplate. As such, current repair methods are very expensive and time consuming.

Accordingly, the present disclosure is directed to an improved yaw brake assembly of a wind turbine having a segmented bushing methods for repairing same.

### BRIEF DESCRIPTION

Aspects and advantages of the invention will be set forth in part in the following description, or may be obvious from the description, or may be learned through practice of the invention.

In an aspect, the present disclosure is directed to a yaw brake assembly for a yaw bearing of a wind turbine. The yaw brake assembly includes at least one yaw brake having a segmented bushing constructed of a plurality of annular segments. Each of the plurality of annular segments includes a wall portion and a flange portion extending from the wall portion. The wall portions are arranged together at a plurality of interfaces to form a cylindrical bushing sized for receipt within a through hole of a bedplate support frame of the wind turbine. The yaw brake assembly also includes a cylinder assembly arranged within the segmented bushing and including a piston assembly. Further, the yaw brake assembly includes a brake pad arranged below the cylinder assembly, wherein the cylinder assembly drives the piston assembly to apply a downward load to the brake pad to engage with a friction surface of the yaw bearing.

In another aspect, the present disclosure is directed to a method of repairing a yaw brake of a wind turbine uptower. With a nacelle of the wind turbine mounted atop a tower of the wind turbine, the method includes removing at least one existing piston assembly and at least one existing bushing from at least one bore of the yaw brake. The bore(s) extends through a through hole of a bedplate support frame of the wind turbine. The existing bushing(s) is damaged and has a lower flange with a larger diameter than a diameter of the at least one bore. The method further includes arranging a plurality of segments within the bore to form a cylindrical bushing. In addition, the method includes installing the existing piston assembly or a new piston assembly within the cylindrical bushing.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a perspective, interior view of an embodiment of a nacelle of the wind turbine shown in FIG. 1;
FIG. 3 illustrates a schematic diagram of an embodiment of a turbine controller of a wind turbine in accordance with aspects of the present disclosure;
FIG. 4 illustrates a perspective view of an embodiment of a bedplate support frame for utilization with a yaw brake assembly according to the present disclosure;
FIG. 5 illustrates a cross-sectional view of yaw brake assembly of a wind turbine according to the present disclosure;
FIG. 6 illustrates a perspective view of a segmented bushing of a yaw brake assembly of a wind turbine according to the present disclosure;
FIGS. 7A and 7B illustrate various perspective views of an embodiment of annular segment of a segmented bushing of a yaw brake assembly of a wind turbine according to the present disclosure;
FIG. 8 illustrates a perspective view of an embodiment of another annular segment of a segmented bushing of a yaw brake assembly of a wind turbine according to the present disclosure;
FIGS. 9A-9E illustrate schematic diagrams of an embodiment of installing a segmented bushing of a yaw brake assembly into a bedplate support from of a wind turbine according to the present disclosure;
FIGS. 10A-10C illustrate various perspective views of embodiments of portions of an annular segment of a segmented bushing of a yaw brake assembly of a wind turbine according to the present disclosure;
FIGS. 11A and 11B illustrates a perspective view of embodiments of filler materials of a segmented bushing of a yaw brake assembly of a wind turbine according to the present disclosure;
FIG. 12 illustrates a perspective view of an embodiment of a flexible annular shim of a segmented bushing of a yaw brake assembly of a wind turbine according to the present disclosure;
FIG. 13A illustrates a perspective view of an embodiment of a collar of a segmented bushing of a yaw brake assembly of a wind turbine according to the present disclosure;
FIG. 13B illustrates a perspective view of an embodiment of a locating key of a segmented bushing of a yaw brake assembly of a wind turbine according to the present disclosure; and
FIG. 14 illustrates a flow diagram of an embodiment of a method of repairing a yaw brake of a wind turbine uptower according to the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of an embodiment can be used with another embodiment to yield a still further embodiment. Thus, it is intended that the present invention covers such modifications and variations as come within the scope of the appended claims and their equivalents.

In general, the present disclosure is directed to a yaw brake assembly of a wind turbine having a segmented bushing methods for repairing same. In an embodiment, for example, the yaw brake assembly includes at least one yaw brake having a segmented bushing constructed of a plurality of annular segments. Each of the plurality of annular segments includes a wall portion and a flange portion extending from the wall portion. The wall portions are arranged together at a plurality of interfaces to form a cylindrical bushing sized for receipt within a through hole of a bedplate support frame of the wind turbine. Each yaw brake further includes a cylinder assembly arranged within the segmented bushing and having a piston assembly and a brake pad arranged below the cylinder assembly. As such, the cylinder assembly drives the piston assembly to apply a downward load to the brake pad to engage with a friction surface of the yaw bearing. Accordingly, the segmented bushing can be more easily repaired because the annular segments can be removed from a top surface of the bedplate support frame, rather than from the bottom only.

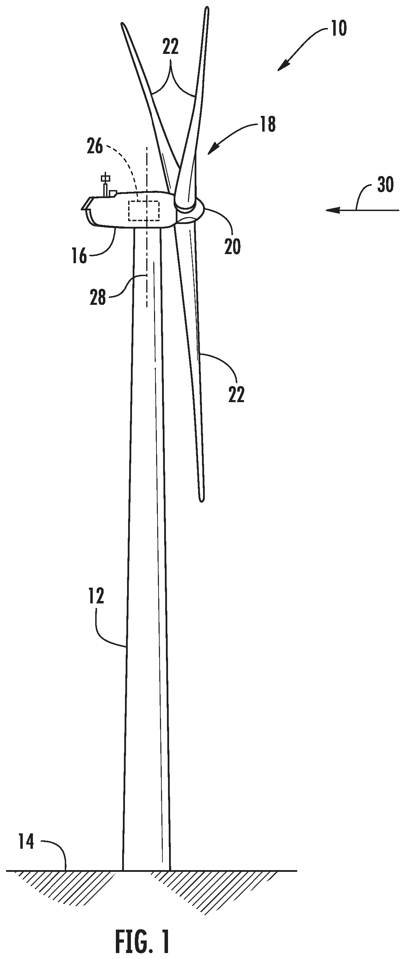

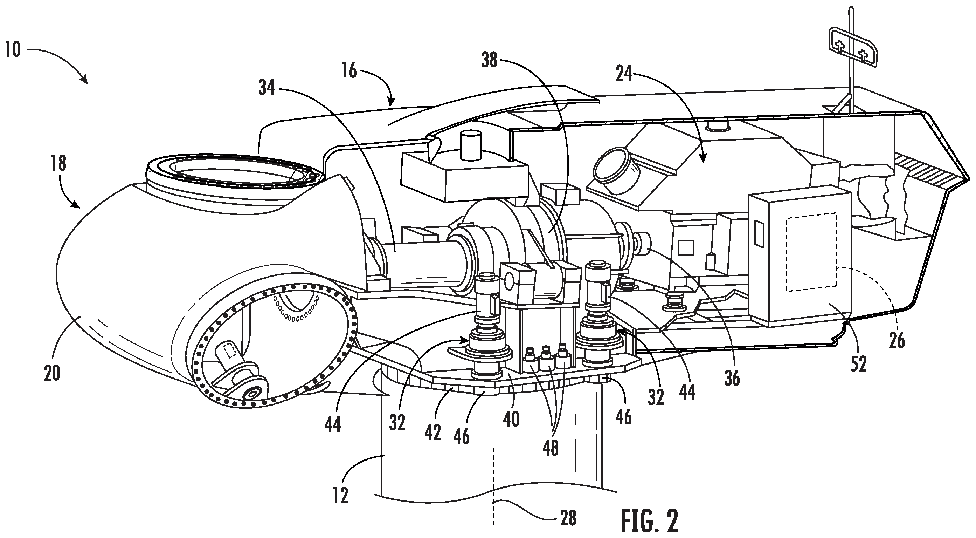

Referring now to the drawings, FIG. 1 illustrates perspective view of an embodiment of a wind turbine 10 according to the present disclosure. As shown, the wind turbine 10 includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in alternative embodiments, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

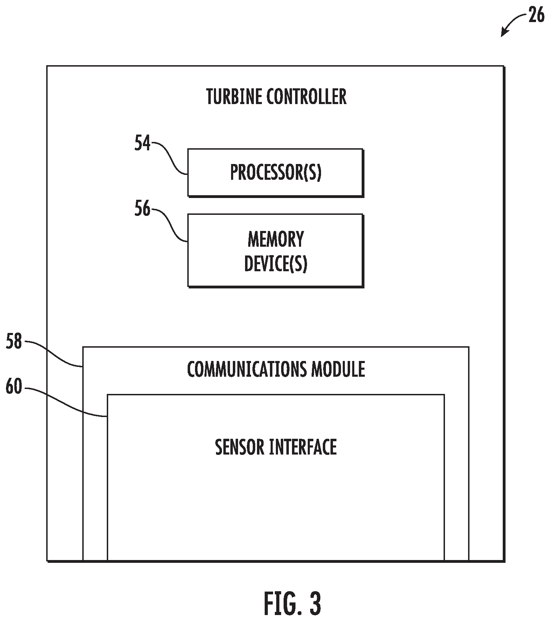

As shown in the embodiment of FIG. 1, the wind turbine 10 includes a turbine control system or turbine controller 26 centralized within the nacelle 16. However, it should be appreciated that the turbine controller 26 may be disposed at any location on or in the wind turbine 10, at any location on the support surface 14 or generally at any other location. As is described below with reference to FIG. 3, the turbine controller 26 may generally include any suitable processing unit configured to perform the functions described herein. Thus, in several embodiments, the turbine controller 26 may include suitable computer-readable instructions that, when implemented, configure the controller 26 to perform various different actions, such as transmitting and executing wind turbine control signals, receiving and analyzing sensor signals and generating message signals to provide an indication of changes to the air gap in the brake assembly or to relative position changes and/or relative displacement between components of the brake assembly, the one or more sensors, and/or a friction surface of the wind turbine

By transmitting and executing wind turbine control signals, the turbine controller 26 may generally be configured to control the various operating modes (e.g., start-up or shut-down sequences) and/or components of the wind turbine 10. For example, the controller 26 may be configured to control the yaw direction of the nacelle 16 about a yaw axis 28 to position the rotor blades 22 with respect to the direction 30 of the wind, thereby controlling the load and power output generated by the wind turbine 10. For example, as is described in greater detail herein, the turbine controller 26 may be configured to transmit control signals/commands to one or more yaw drive mechanisms 32 (FIG. 2) of the wind turbine 10 such that the nacelle 16 may be rotated about the yaw axis 28.

Referring now to FIG. 2, a simplified, internal view of an embodiment of the nacelle 16 of the wind turbine 10 is illustrated. As shown, a generator 24 is disposed within the nacelle 16. In general, the generator 24 is coupled to the rotor 18 of the wind turbine 10 for generating electrical power from the rotational energy generated by the rotor 18. The rotor 18 may include a rotor shaft 34 coupled to the hub 20 for rotation therewith. The generator 24 may then be coupled to the rotor shaft 34 such that rotation of the rotor shaft 34 drives the generator 24. In the illustrated embodiment of FIG. 2, the generator 24 includes a generator shaft 36 rotatably coupled to the rotor shaft 34 through a gearbox 38. However, in other embodiments, it should be appreciated that the generator shaft 36 may be rotatably coupled directly to the rotor shaft 34. Alternatively, the generator 24 may be directly rotatably coupled to the rotor shaft 34 (often referred to as a "direct-drive wind turbine").

Additionally, the wind turbine 10 may include one or more yaw drive mechanisms 32 optionally mounted to and/or through a bedplate support frame 40 positioned atop the tower 12. In particular, in the illustrated embodiment of FIG. 2, each yaw drive mechanism 32 is mounted to and through the bedplate support frame 40 so as to engage a yaw bearing 42 (also referred to as a slewing ring bearing or tower ring gear) of the wind turbine 10. The yaw bearing 42 is mounted to the bedplate support frame 40 such that, as the yaw bearing 42 rotates about the yaw axis 28 (see e.g., FIG. 1), the bedplate support frame 40 and, thus, the nacelle 16 are similarly rotated about the yaw axis 28 (FIGS. 1 and 2).

In general, it should be appreciated that the yaw drive mechanisms 32 may have any suitable configuration and may include any suitable components known in the art to allow such mechanisms 32 to function as described herein. For example, as shown in FIG. 2, each yaw drive mechanism 32 includes a yaw motor 44 mounted to the bedplate support frame 40. The yaw motor 44 is coupled to a yaw gear 46 (e.g., a pinion gear) configured to engage the yaw bearing 42. The yaw motor 44 may be coupled to the yaw gear 46 directly (e.g., by an output shaft (not shown) extending through the bedplate support frame 40) or indirectly through a suitable gear assembly coupled between the yaw motor 44 and the yaw gear 46. As such, the torque generated by the yaw motor 44 is transmitted through the yaw gear 46 and applied to the yaw bearing 42 to permit the nacelle 16 to be rotated about the yaw axis 28. It should be appreciated that, although the illustrated wind turbine 10 is shown to include two yaw drive mechanisms 32, the wind turbine 10 may generally include any suitable number of yaw drive mechanisms 32, such as a single yaw drive mechanism 32 or more than two yaw drive mechanisms 32.

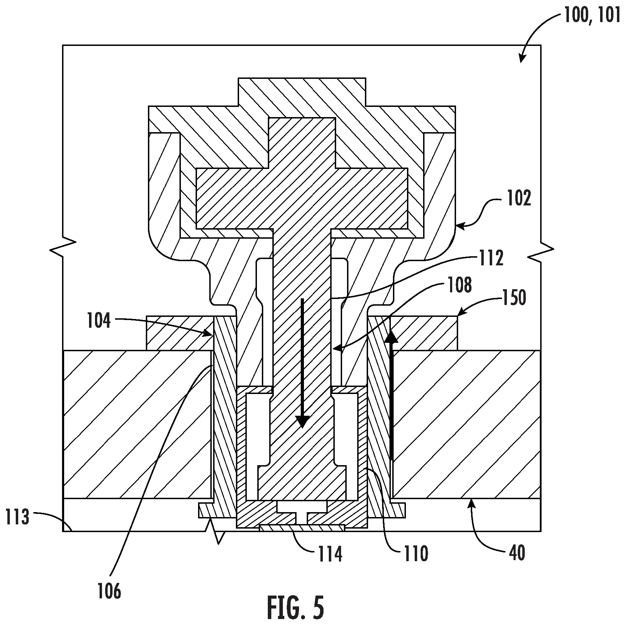

Referring still to FIG. 2, the wind turbine 10 also includes a plurality of yaw brake assemblies 48 for controlling the rotation of the nacelle 16 about the yaw axis 28. The yaw brake assemblies 48 are mounted to and/or through the bedplate support frame 40 such that a brake pad 114 (FIG. 5) of each yaw brake assembly 48 is frictionally engaged with a suitable friction surface of the wind turbine 10 (e.g., a surface of the yaw bearing 42) in order to stop, slow and/or otherwise control the rotation of the nacelle 16. It should be appreciated that the wind turbine 10 may generally include any suitable number of yaw brake assemblies 48. For instance, in an embodiment, the wind turbine 10 may include between twelve and twenty yaw brake assemblies 48. However, in other embodiments, the wind turbine 10 may include less than twelve yaw brake assemblies 48 or greater than twenty yaw brake assemblies 48.

Additionally, the turbine controller 26 may also be located within the nacelle 16. For example, as shown in the illustrated embodiment, the turbine controller 26 is disposed within a control cabinet 52 mounted to a portion of the nacelle 16. However, in other embodiments, the turbine controller 26 may be disposed at any other suitable location on and/or within the wind turbine 10 or at any suitable location remote to the wind turbine 10. Moreover, the turbine controller 26 may also be communicatively coupled to various components of the wind turbine 10 for generally controlling the wind turbine 10 and/or such components. For example, the turbine controller 26 may be communicatively coupled to the yaw drive mechanisms 32 such that suitable control signals may be transmitted to the yaw drive mechanisms 32 to allow the rotation of the nacelle 16 and the orientation of the rotor blades 22 to be controlled. Moreover, the turbine controller 26 may be communicatively coupled to the yaw brake assembly(ies) 48 such that suitable control signals may be transmitted to the yaw brake assembly(ies) 48 to engage or disengage the brakes.

Referring now to FIG. 3, there is illustrated a block diagram of an embodiment of the turbine controller 26 of the wind turbine 10. In general, the turbine controller 26 may include a computer or any other suitable processing unit. Thus, in several embodiments, the turbine controller 26 may include one or more processor(s) 54 and associated memory device(s) 56 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 56 of the turbine controller 26 may generally comprise memory element(s) including, but are not limited to, computer readable medium (e.g., random access memory (RAM)), computer readable nonvolatile medium (e.g., a flash memory), a floppy disk, a compact disc-read only memory (CD-ROM), a magneto-optical disk (MOD), a digital versatile disc (DVD) and/or other suitable memory elements. Such memory device(s) 56 may generally be configured to store suitable computer-readable instructions that, when implemented by the processor(s) 54, configure the turbine controller 26 to perform various functions including, but not limited to, monitoring the air gap in a brake assembly of a wind turbine, determining relative position changes and/or relative displacement between components of the brake assembly, the one or more sensors, and/or a friction surface of the wind turbine, monitoring one or more changes associated with the air gap as the one or more brake plates or other components of the brake assembly or wind turbine wear or shift, and/or the like. The memory device(s) 56 may also be used to store temporary input and output variables and other immediate information during execution by the processor(s) 54 of the computer-readable instructions.

Additionally, as shown in FIG. 3, the turbine controller 26 may also include a communications module 58 configured to facilitate communication between the turbine controller 26 and the various components of the wind turbine 10 including the yaw brake assembly(ies) 48. In several embodiments, the communications module 58 may include a sensor interface 60 to permit various sensors (not shown) of the wind turbine 10 to communicate with the turbine controller 26. For instance, the sensor interface 60 may include one or more analog-to-digital converters configured to convert analog signals into digital signals that can be used by the processor(s) 54.

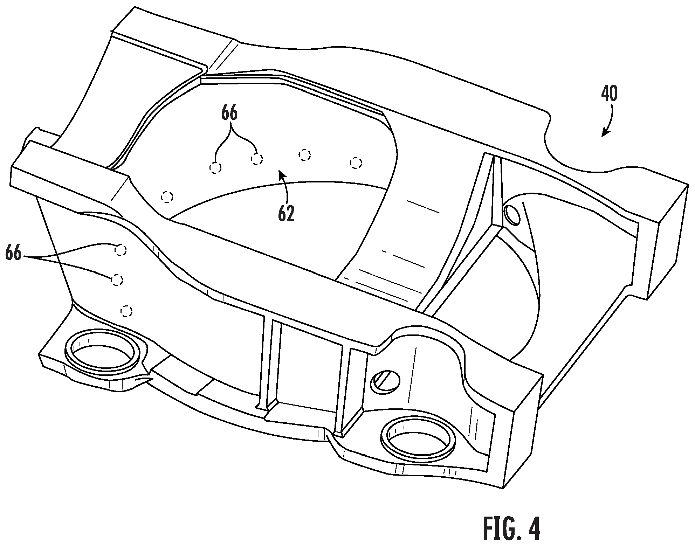

Referring now to FIG. 4, a perspective view of an embodiment of the bedplate support frame 40 described herein according to the present disclosure is illustrated. In particular, as shown, the bedplate support frame 40 includes an annular flange 62. The annular flange 62 is arranged adjacent to the yaw bearing 42 (not shown in FIG. 4). Furthermore, as shown, the bedplate support frame 40 includes a plurality of through holes 66, each for receiving at least part of one of the yaw brake assembly(ies) 48 described herein.

Referring now to FIG. 5, a cross-sectional view of an embodiment of a yaw brake assembly 100 according to the present disclosure is illustrated. More specifically, as shown, the yaw brake assembly 100 is configured as a hydraulic-applied yaw brake 101 and includes a cylinder assembly 102 arranged within a segmented bushing 104 that are both received within a through hole 106 of the bedplate support frame 40 of the nacelle 16.

The cylinder assembly 102 further includes a piston assembly 108 (e.g., having a brass piston 110 and a hydraulic piston 112) that applies a downward cyclical load to one or more brake pads 114 arranged below the cylinder assembly 102 to engage with a friction surface 113 of the at least one race of the yaw bearing 42. For example, in an embodiment, the brake pad(s) 114 may be radially aligned with an outer race of the yaw bearing 42.

For example, in an embodiments, the piston assembly 108 is configured to be pushed or pressed in the direction of the friction surface 113 in order to maintain a constant frictional force between the brake pad(s) 114 and the friction surface 113. Thus, as the usable width of the brake pad(s) 114 is reduced due to wear, the position of the piston assembly 108 shifts downwardly (i.e., in the direction of the friction surface) in order to maintain the desired frictional force between the brake pad(s) 114 and the friction surface 113.

It should be appreciated that the illustrated friction surface 113 may generally include the surface of any suitable wind turbine component that permits the rotation of the nacelle 16 to be stopped, slowed and/or otherwise controlled upon application of a frictional force against such surface. For example, in an embodiment, the friction surface 113 may include a surface of the yaw bearing 42. In another embodiment, the friction surface 113 may include a surface of a brake disk (not shown) configured to be coupled to the yaw bearing 42.

It should also be appreciated that the yaw brake assembly 100 may generally include any suitable structure and/or means for pushing or pressing the piston assembly 108 against the friction surface 113 such that the brake pad(s) 114 is maintained in sliding engagement with the friction surface 113. For example, as shown, in an embodiment, the cylinder assembly 102 may include a hydraulic cylinder. In other embodiments, the cylinder assembly 102 may include a springloaded cylinder, a pneumatic cylinder, an electro-magnetic solenoid or motor, other electro-magnetically actuated devices, and/or any other suitable displacement mechanism or actuation device configured to apply a force against the piston assembly 108, thereby pushing or pressing the piston assembly 108 in the direction of the friction surface 113.

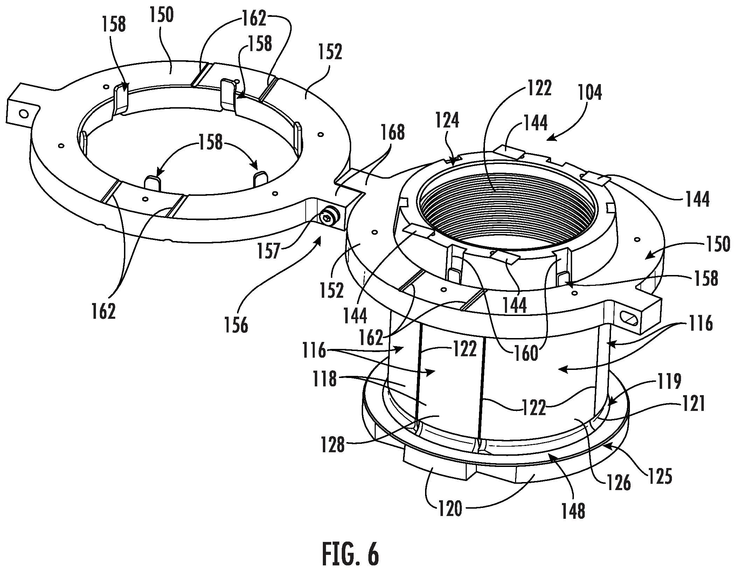

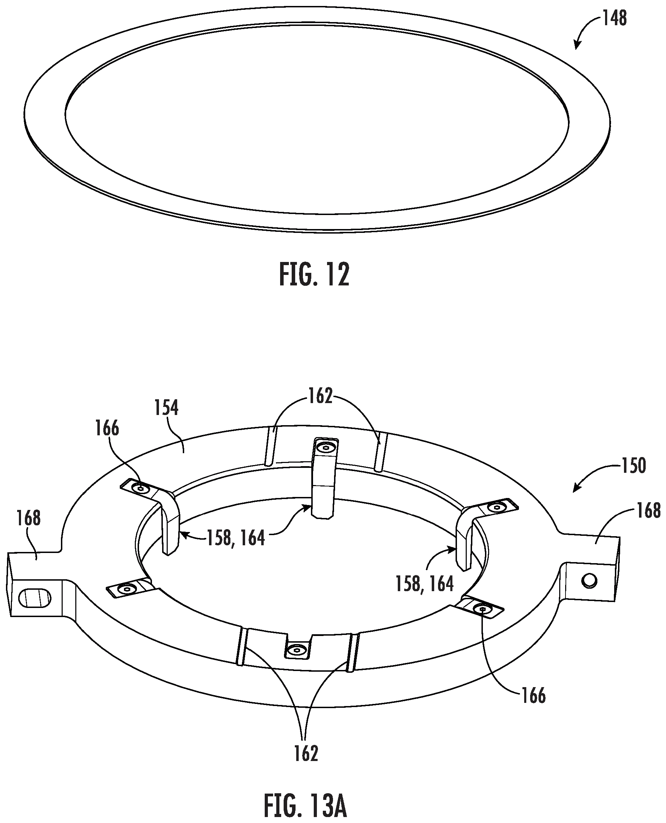

Referring now to FIGS. 6-9, the segmented bushing 104 is constructed of a plurality of annular segments 116. More specifically, as shown in FIGS. 6-8, each of the plurality of annular segments 116 includes a wall portion 118 and a flange portion 120 extending from the wall portion 118. Furthermore, as shown particularly in FIG. 6, the wall portions 118 are arranged together at a plurality of interfaces 122 to form a cylindrical bushing 124 sized for receipt within the through hole 106 of the bedplate support frame 40. Furthermore, as shown, the flange portions 120 are arranged together to form a continuous flange 125. Thus, in an embodiment, as shown in FIGS. 6 and 12, the yaw brake assembly 100 may further include a flexible annular shim 148 atop the continuous flange 125 for distributing loads.

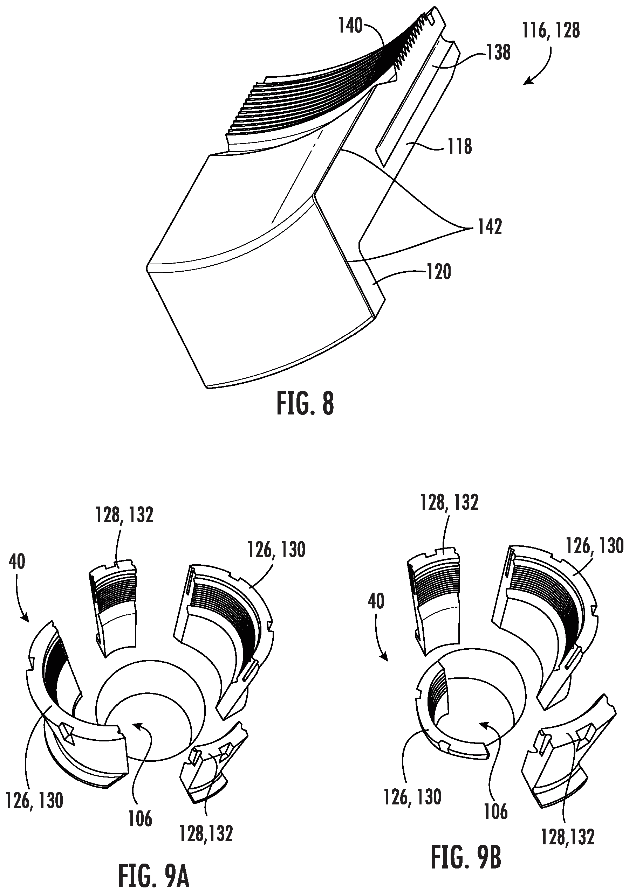

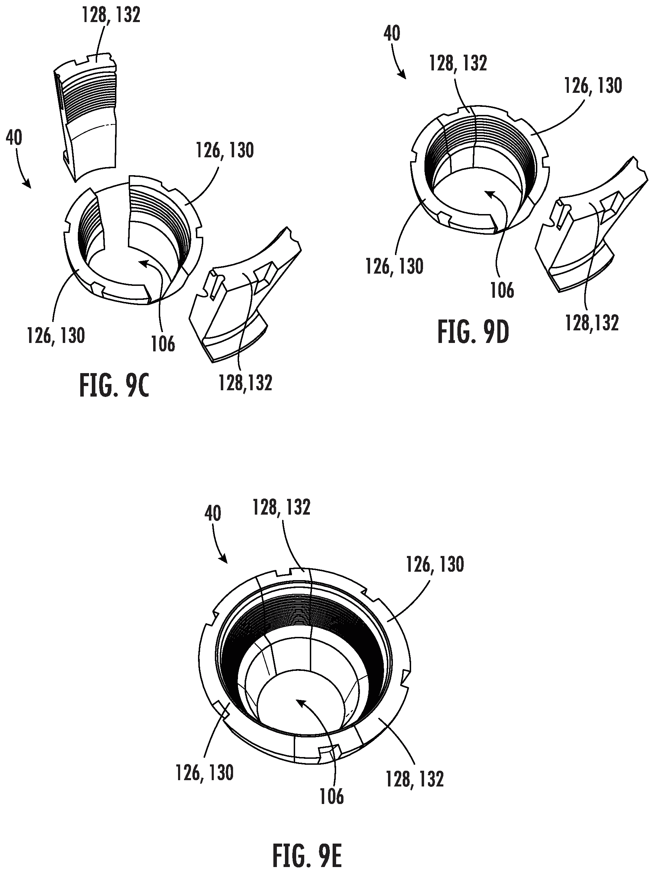

In particular embodiments, the plurality of annular segments 116 may include a first plurality of segments 126 (FIGS, 6, 7A, 7B, and 9A-9E) and a second plurality of segments 128 (FIGS. 6, 8, and 9). More specifically, as shown in FIGS. 6 and 9A-9E, the first plurality of segments 126 are of a first size, whereas the second plurality of segments 128 are of a second size, with the first size being larger than the second size. For example, as shown in FIG. 6, the first plurality of segments 126 may include a first pair of segments 130 and the second plurality of segments 128 may include a second pair of segments 132.

In such embodiments, as shown generally in FIGS. 9A-9C, the first pair of segments 130 may be arranged on first opposing sides 134 of the through hole 106 of the bedplate support frame 40. Furthermore, as shown in FIG. 9B, 9D, and 9E, the second pair of segments 132 may be arranged on second opposing sides 136 of the through hole 106 of the bedplate support frame 40. In still further embodiments, it should be understood that any suitable number of segments 116 may be included in the segmented bushing 104, such as more than four segments or less than four segments.

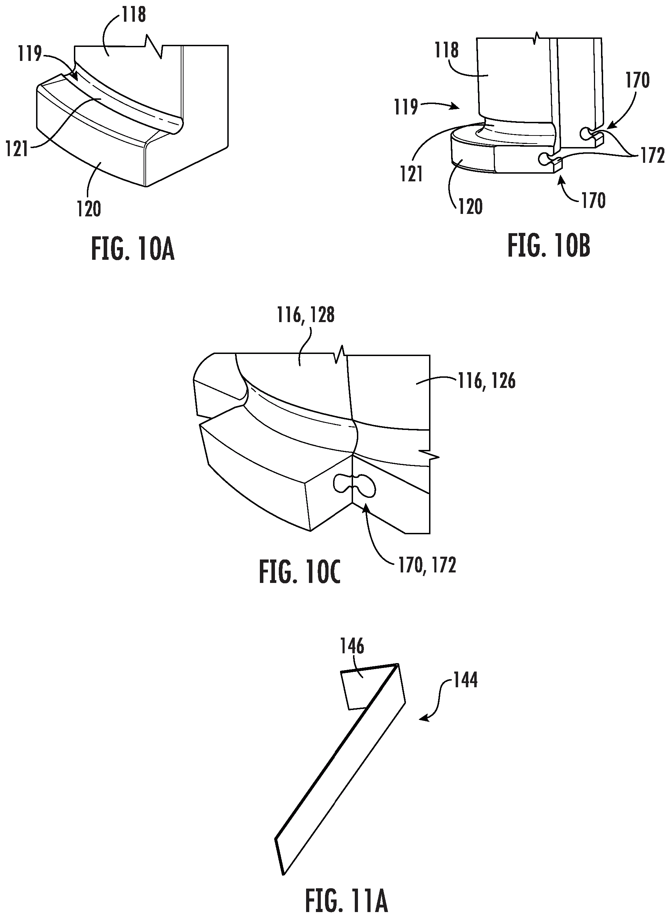

In still further embodiments, as shown in FIGS. 10B-10C, the plurality of interfaces 122 of the annular segments 116 may also include one or more interconnecting features 170 for securing the wall portions 118 together so as to maintain the wall portions 118 at a desired elevation. For example, as shown in FIGS. 10B-10C, the interconnecting features 170 may include any suitable interlocking tabs, such as one or more puzzle piece connections or one or more dovetail connections 172.

In certain embodiments, the annular segments 116 of the segmented bushing 104 may be formed by forming a monolithic bushing that is subsequently machined into segments. For example, in an embodiment, the monolithic bushing may be machined using electrical discharge machining (EDM) or any other suitable machining process that provides clean and minimal cuts to the monolithic bushing so as to maintain its integrity. In other embodiments, the segmented bushing 104 may be initially formed of segments that are subsequently machined and arranged together.

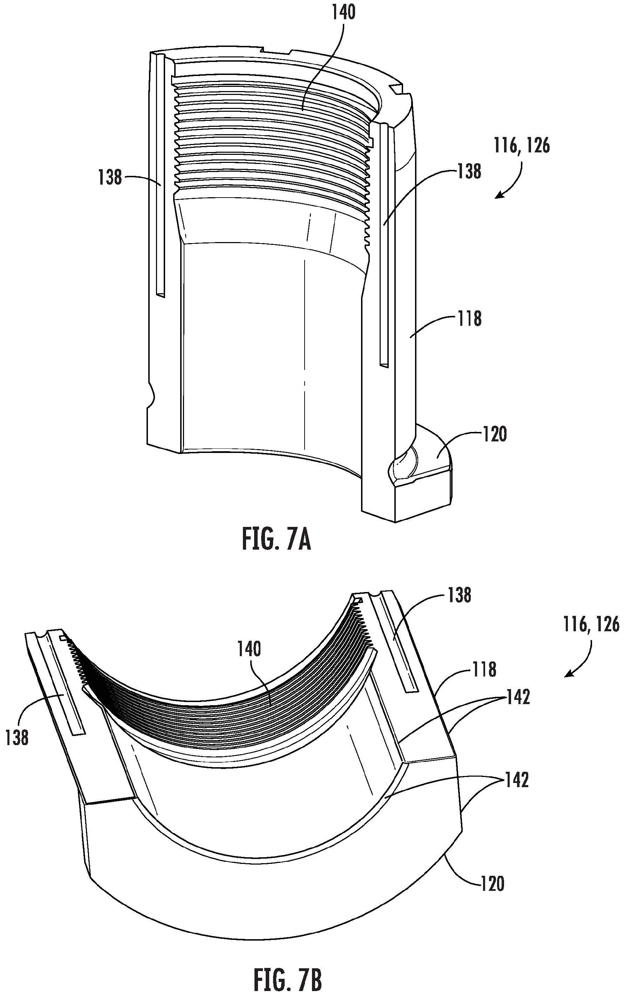

Additional machining may also be used to optimize the segmented bushing 104, such as using EDM to form one or more additional features therein. As an example, as shown in FIGS. 7A-8, one or more long grooves 138 may be machined into the annular segments 116 for receiving one or more fasteners therein. Moreover, as shown in FIGS. 7A-8, the annular segments 116 may be machined to include threads 140 such that the segments 116 are threaded and can receive a corresponding threaded component (e.g., the cylinder assembly 102). Still additional features that may be machined into the annular segments 116 may include, for example, various chamfers 142, as shown in FIGS. 7B and 8. Moreover, as shown in FIGS. 6, 10A, and 10B, the flange portions 120 of the annular segments 116 generally extend from the wall portions 118 at an angled interface 119 having a fillet 121. In such embodiments, a radius of the fillet 121 can be optimized using computer modeling, such as finite element analysis (FEA), to minimize loads at the angled interface 119. In an embodiment, for example, the fillet 121 may range from greater than 1 millimeter (mm) to about 5 mm. Thus, any suitable fillet 121 may be machined into the segmented bushing 104 (e.g., before or after segmentation).

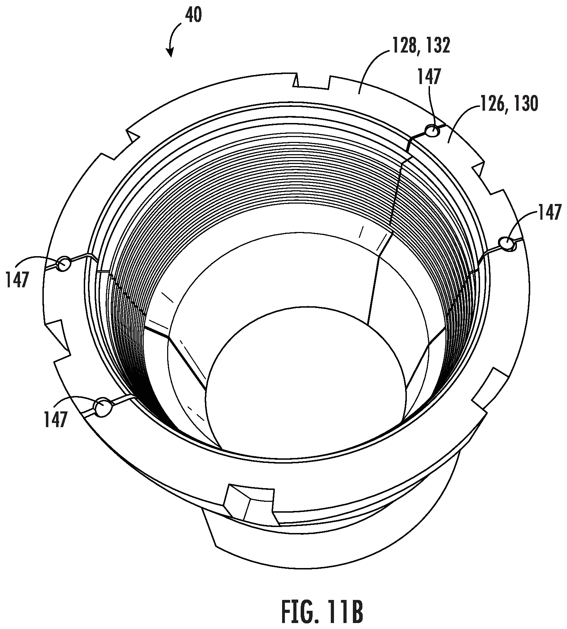

Referring now to FIGS. 6 and 11A-11B, the yaw brake assembly 100 may further include filler materials 144, 145 arranged within the plurality of interfaces 122. For example, as shown particularly in FIG. 11A, the filler material(s) 144 may include one or more shims 145 configured as a flat metal shim (or constructed of any other suitable material) that is sandwiched between two of the annular segments 116 so as to fill space therebetween and/or to cover cut lines at the interfaces 122. Thus, in particular embodiments, as shown in FIG. 11A, the shim(s) 144 may also include a flap 146 that forms a generally L-shaped configuration. In other embodiments, the flap 146 may be omitted from the shim(s) 144. In another embodiment, as shown in FIG. 11B, the filler material(s) 144 may include one or more round pins 147 sandwiched between two of the annular segments 116 so as to fill space therebetween.

Referring now to FIGS. 6 and 13A, the yaw brake assembly 100 may generally include a plurality of yaw brakes 101 (one of which is shown in FIG. 6) and a plurality of collars 150. More specifically, FIG. 6 illustrates two collars 150 secured together with top surfaces 152 of the collars 150 facing upward, whereas FIG. 13A illustrates one of the collars 150 facing downward to illustrate a bottom surface 154 thereof. Furthermore, as shown in FIG. 6, one of the collars 150 is configured to receive a respective cylindrical bushing 124 of one of the yaw brakes 101, i.e., by being placed around a circumference of the through hole 106 of the bedplate support frame 40. Moreover, as shown, each collar 150 is connected to an adjacent collar 150 via a mechanical joint 156, e.g., which may include one or more fasteners or bolts 157. More specifically, as shown in FIGS. 6 and 13A, each collar 150 may include a flange 168 that can be aligned with a flange 168 of an adjacent collar 150 for connecting thereto via the fastener(s) 157. Accordingly, by securing adjacent collars 150 together, clocking and radial reaction for outward thread forces of the segmented bushings 104 is properly controlled.

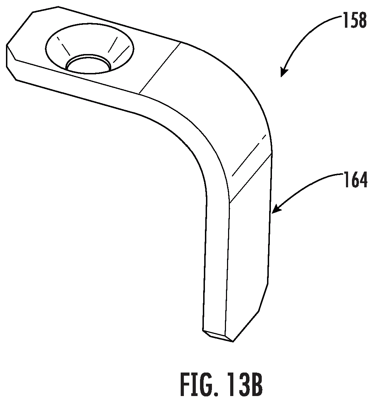

Still referring to FIGS. 6 and 13A, the collar(s) 150 may include one or more locating keys 158 corresponding to respective alignment keys 160 (FIG. 6) of the respective cylindrical bushing 124 to maintain a desired orientation of the yaw brake assembly 100. For example, as shown generally in FIGS. 6, 13A, and 13B, the locating key(s) 158 of the collar(s) 150 may include locating tabs, such as an L-shaped flange 164, that can be seated within a groove or recess of the collar(s) 150 and secured in place using any suitable means, such as a fastener 166.

Moreover, as shown, the collar(s) 150 may include one or more alignment features 162 for providing a visual guide for assembling the wall portions 118 of the annular segments 116 therein. For example, as shown in FIGS. 6 and 13A, the alignment features 162 may include markers or grooves that are generally the same width as one or more of the annular segments 116 such that the annular segments 116 can be easily aligned using the alignment features 162 of the collar(s) 150.

As mentioned, during manufacturing of a wind turbine, existing monolithic bushings are installed from a bottom side of the bedplate support frame on the ground due to a flange of the bushing having a larger diameter than a through hole that receives the bushing. The corresponding cylinder assembly is then secured to each bushing to secure the bushing in place. The bedplate support frame, the nacelle, and other uptower components are then lifted uptower via a crane and secured atop the tower of the wind turbine.

Overtime, downward cyclical loads of the yaw brake can cause a reaction load on the bushing(s), which can lead to bushing damage and/or failure. In the event of bushing damage or failure, the bushing cannot currently be replaced without a substantial repair operation that requires a crane to lower the nacelle from atop the tower to the ground and remove the yaw bearing. For example, since the flange has a larger diameter than the through hole, the bushing cannot be removed from a top side of the bedplate support frame. As such, current repair methods are very expensive and time consuming.

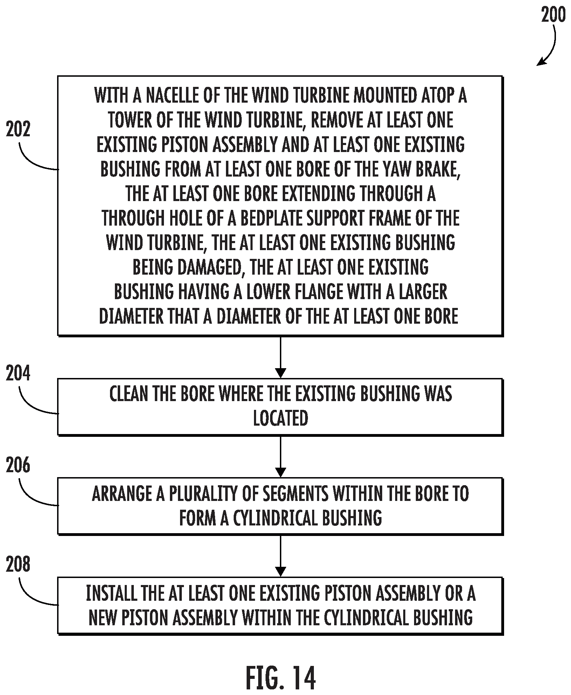

Accordingly, the present disclosure is directed to a method of repairing a yaw brake (including a yaw brake bushing) of a wind turbine uptower without the need for remove the nacelle from atop the tower. More specifically and referring now to FIG. 14, a flow diagram of an embodiment of a method 200 of repairing a yaw brake of a wind turbine uptower according to the present disclosure is illustrated. In particular, the method 200 can be used to repair a yaw brake of the wind turbine 10 described herein. However, it should be appreciated that the method 200 is discussed herein only to describe aspects of the present disclosure and is not intended to be limiting. Further, though FIG. 14 depicts a method having steps performed in a particular order for purposes of illustration and discussion, those of ordinary skill in the art, using the disclosures provided herein, will understand that the steps of any of the methods discussed herein can be adapted, rearranged, expanded, omitted, or modified in various ways without deviating from the scope of the present disclosure. Moreover, although aspects of the methods are explained with respect to the yaw brake assemblies 48 as an example, it should be appreciated that these methods may be applied to any brake structure.

As shown at (202), the method 200 includes, with a nacelle of the wind turbine mounted atop a tower of the wind turbine, removing at least one existing piston and at least one existing bushing from at least one bore of the yaw brake, the at least one bore extending through a through hole of a bedplate support frame of the wind turbine, the at least one existing bushing being damaged, the at least one existing bushing having a lower flange with a larger diameter than a diameter of the at least one bore. For example, in an embodiment, removing the existing bushing from the bore of the yaw brake may include machining the existing bushing into pieces to remove the existing bushing. Moreover, as shown at (204), after such removal, the method 200 may include cleaning a bore where the existing bushing was located.

As shown at (206), the method 200 includes arranging a plurality of segments within the bore to form a cylindrical bushing. For example, in an embodiment, the plurality of segments may include the annular segments described herein with each annular segment having a wall portion and a flange portion extending from the wall portion. further comprising arranging the flange portions together to form a continuous flange and arranging a flexible annular shim atop the continuous flange for distributing loads. Accordingly, the method 200 may include arranging the plurality of annular segments of the segmented bushing within the bore to form the cylindrical bushing. In another embodiment, arranging the plurality of segments within the bore to form the cylindrical bushing may include arranging a bushing segment within the bore (e.g., a cylindrical component without a flange) and subsequently securing a flange segment to the bushing segment through a gap created by removal of removing the existing bushing. In such embodiments, a connecting component (such as a C-clip) may also be used to secure the flange segment to the bushing segment.

As shown at (208), the method 200 includes installing the at least one existing piston assembly or a new piston assembly within the cylindrical bushing. For example, in an embodiment, if an existing piston assembly is not damaged, the existing piston assembly may be reused and installed back within the cylindrical bushing. If the existing piston is damaged, however, the existing piston assembly can be removed and a new piston assembly installed in its place. Subsequent repairs can be completed more easily, i.e., after installation of the segmented bushing, because the annular segments of the segmented bushing can be removed from a top surface of the bedplate support frame, rather than from the bottom only, thereby eliminating the use of a crane.

Further aspects of the invention are provided by the subject matter of the following clauses:
A yaw brake assembly for a yaw bearing of a wind turbine, the yaw brake assembly comprising: at least one yaw brake comprising: a segmented bushing constructed of a plurality of annular segments, each of the plurality of annular segments comprising a wall portion and a flange portion extending from the wall portion, the wall portions being arranged together at a plurality of interfaces to form a cylindrical bushing sized for receipt within a through hole of a bedplate support frame of the wind turbine; a cylinder assembly arranged within the segmented bushing and comprising a piston assembly; and a brake pad arranged below the cylinder assembly, wherein the cylinder assembly drives the piston assembly to apply a downward load to the brake pad to engage with a friction surface of the yaw bearing.

The yaw brake assembly of any preceding clause, wherein the plurality of annular segments comprises a first plurality of segments and a second plurality of segments, the first plurality of segments being of a first size, the second plurality of segments being of a second size, the first size being larger than the second size.

The yaw brake assembly of any preceding clause, wherein the first plurality of segments comprises a first pair of segments and the second plurality of segments comprises a second pair of segments, and wherein the first pair of segments are arranged on first opposing sides of the through hole of the bedplate support frame and the second pair of segments are arranged on second opposing sides of the through hole of the bedplate support frame.

The yaw brake assembly of any preceding clause, further comprising one or more filler materials arranged within the plurality of interfaces.

The yaw brake assembly of any preceding clause wherein the flange portions are arranged together to form a continuous flange, the yaw brake assembly further comprising a flexible annular shim atop the continuous flange for distributing loads.

The yaw brake assembly of any preceding clause, further comprising a plurality of yaw brakes and a plurality of collars, wherein one of the plurality of collars receives a respective cylindrical bushing of one of the plurality of yaw brakes, and wherein each collar of the plurality of collars is connected to an adjacent collar via a mechanical joint.

The yaw brake assembly of any preceding clause, wherein each of the plurality of collars comprises one or more locating keys corresponding to respective alignment keys of the respective cylindrical bushing to maintain a desired orientation of the yaw brake assembly.

The yaw brake assembly of any preceding clause, wherein each of the plurality of collars comprises one or more alignment features for providing a visual guide for assembling the wall portions therein.

The yaw brake assembly of any preceding clause, wherein the flange portion extends from the wall portion at an angled interface, the angled interface comprising a fillet.

The yaw brake assembly of any preceding clause, wherein the plurality of interfaces further comprise one or more interconnecting features for securing the wall portions together so as to maintain the wall portions at a desired elevation.

The yaw brake assembly of any preceding clause, wherein the one or more interconnecting features comprises at least one of one or more puzzle piece connections or one or more dovetail connections.

A method of repairing a yaw brake of a wind turbine uptower, the method comprising: with a nacelle of the wind turbine mounted atop a tower of the wind turbine, removing at least one existing piston assembly and at least one existing bushing from at least one bore of the yaw brake, the at least one bore extending through a through hole of a bedplate support frame of the wind turbine, the at least one existing bushing being damaged, the at least one existing bushing having a lower flange with a larger diameter than a diameter of the at least one bore; arranging a plurality of segments within the bore to form a cylindrical bushing; and installing the existing piston assembly or a new piston assembly within the cylindrical bushing.

The method of any preceding clause, wherein removing the existing bushing from the bore of the yaw brake further comprises machining the existing bushing into pieces to remove the existing bushing.

The method of any preceding clause, further comprising, after removing the existing bushing, cleaning a bore where the existing bushing was located.

The method of any preceding clause, wherein the plurality of segments comprises a plurality of annular segments, each of the plurality of annular segments comprising a wall portion and a flange portion extending from the wall portion.

The method of any preceding clause, further comprising arranging the flange portions together to form a continuous flange and arranging a flexible annular shim atop the continuous flange for distributing loads.

The method of any preceding clause, wherein arranging the plurality of segments within the bore to form the cylindrical bushing further comprises:
arranging a bushing segment within the bore; and subsequently securing a flange segment to the bushing segment through a gap created by removal of removing the at least one existing bushing.

The method of any preceding clause, further comprising arranging one or more filler materials within the plurality of interfaces.

The method of any preceding clause, wherein the wind turbine comprises a plurality of yaw brakes and a plurality of collars, the method further comprising: arranging one of the plurality of collars around a circumference of a respective through hole of the bedplate support frame; and securing adjacent collars of the plurality of collars together via a mechanical joint to control clocking and radial reaction for outward thread forces of the segmented bushings.

The method of any preceding clause, wherein each of the plurality of collars comprises one or more locating keys corresponding to respective alignment keys of the respective cylindrical bushing, the method further comprising: aligning the respective alignment keys of the respective cylindrical bushings to the one or more locating keys of the plurality of collars to maintain a desired orientation of the plurality of yaw brakes.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A yaw brake assembly for a yaw bearing of a wind turbine, the yaw brake assembly comprising:
at least one yaw brake comprising:
a segmented bushing constructed of a plurality of annular segments, each of the plurality of annular segments comprising a wall portion and a flange portion extending from the wall portion, the wall portions being arranged together at a plurality of interfaces to form a cylindrical bushing sized for receipt within a through hole of a bedplate support frame of the wind turbine;
a cylinder assembly arranged within the segmented bushing and comprising a piston assembly; and
a brake pad arranged below the cylinder assembly,
wherein the cylinder assembly drives the piston assembly to apply a downward load to the brake pad to engage with a friction surface of the yaw bearing.

2. The yaw brake assembly of claim 1, wherein the plurality of annular segments comprises a first plurality of segments and a second plurality of segments, the first plurality of segments being of a first size, the second plurality of segments being of a second size, the first size being larger than the second size.

3. The yaw brake assembly of claim 2, wherein the first plurality of segments comprises a first pair of segments and the second plurality of segments comprises a second pair of segments, and wherein the first pair of segments are arranged on first opposing sides of the through hole of the bedplate support frame and the second pair of segments are arranged on second opposing sides of the through hole of the bedplate support frame.

4. The yaw brake assembly of any of the preceding claims, further comprising one or more filler materials arranged within the plurality of interfaces.

5. The yaw brake assembly of any of the preceding claims, wherein the flange portions are arranged together to form a continuous flange, the yaw brake assembly further comprising a flexible annular shim atop the continuous flange for distributing loads.

6. The yaw brake assembly of any of the preceding claims, further comprising a plurality of yaw brakes and a plurality of collars, wherein one of the plurality of collars receives a respective cylindrical bushing of one of the plurality of yaw brakes, and wherein each collar of the plurality of collars is connected to an adjacent collar via a mechanical joint.

7. The yaw brake assembly of claim 6, wherein each of the plurality of collars comprises one or more locating keys corresponding to respective alignment keys of the respective cylindrical bushing to maintain a desired orientation of the yaw brake assembly and/or wherein each of the plurality of collars comprises one or more alignment features for providing a visual guide for assembling the wall portions therein.

8. The yaw brake assembly of any of the preceding claims, wherein the flange portion extends from the wall portion at an angled interface, the angled interface comprising a fillet.

9. The yaw brake assembly of any of the preceding claims, wherein the plurality of interfaces further comprise one or more interconnecting features for securing the wall portions together so as to maintain the wall portions at a desired elevation, in particular wherein the one or more interconnecting features comprises at least one of one or more puzzle piece connections or one or more dovetail connections.

10. A method of repairing a yaw brake of a wind turbine uptower, the method comprising:
with a nacelle of the wind turbine mounted atop a tower of the wind turbine, removing at least one existing piston assembly and at least one existing bushing from at least one bore of the yaw brake, the at least one bore extending through a through hole of a bedplate support frame of the wind turbine, the at least one existing bushing being damaged, the at least one existing bushing having a lower flange with a larger diameter than a diameter of the at least one bore;
arranging a plurality of segments within the bore to form a cylindrical bushing; and
installing the existing piston assembly or a new piston assembly within the cylindrical bushing.

11. The method of claim 10, wherein removing the existing bushing from the bore of the yaw brake further comprises machining the existing bushing into pieces to remove the existing bushing, optionally or additionally comprising, after removing the existing bushing, cleaning a bore where the existing bushing was located.

12. The method of claim 10, wherein the plurality of segments comprises a plurality of annular segments, each of the plurality of annular segments comprising a wall portion and a flange portion extending from the wall portion, in particular further comprising arranging the flange portions together to form a continuous flange and arranging a flexible annular shim atop the continuous flange for distributing loads.

13. The method of any of claims 10 to 12, wherein arranging the plurality of segments within the bore to form the cylindrical bushing further comprises:
arranging a bushing segment within the bore; and
subsequently securing a flange segment to the bushing segment through a gap created by removal of removing the at least one existing bushing.

14. The method of any of claims 10 to 13, further comprising arranging one or more filler materials within the plurality of interfaces.

15. The method of any of claims 10 to 14, wherein the wind turbine comprises a plurality of yaw brakes and a plurality of collars, the method further comprising:
arranging one of the plurality of collars around a circumference of a respective through hole of the bedplate support frame; and
securing adjacent collars of the plurality of collars together via a mechanical joint to control clocking and radial reaction for outward thread forces of the segmented bushings, in particular wherein each of the plurality of collars comprises one or more locating keys corresponding to respective alignment keys of the respective cylindrical bushing, the method further comprising:
aligning the respective alignment keys of the respective cylindrical bushings to the one or more locating keys of the plurality of collars to maintain a desired orientation of the plurality of yaw brakes.
